# EUROPÄISCHE PATENTSCHRIFT

(11) **EP 1 480 092 B1**
(45) Veröffentlichungstag und Bekanntmachung des Hinweises auf die Patenterteilung: **03.12.2008**
(21) Anmeldenummer: 04009706.5
(22) Anmeldetag: 23.04.2004
(51) Int. Cl.: G05B 19/05

(54) **Verfahren zur Projektierung eines Automatisierungssystems**
Method for construing an automation system
Procédé pour la conception d'un système d'automatisation

(30) Priorität: 19.05.2003 DE 10322837
(43) Veröffentlichungstag der Anmeldung: 24.11.2004
(73) Patentinhaber: SIEMENS AKTIENGESELLSCHAFT, 80333 München (DE)
(72) Erfinder: Brousek, Norbert, 90766 Fürth (DE); Dausend, Stefan, 91226 Schwabach (DE); Weissbach, Bernhard, Dr., 09669 Frankenberg (DE)

(56) Entgegenhaltungen:
- EP-A- 1 274 291
- WALTER: "Einführung in den Simatic-Manger" 14. Mai 2003 (2003-05-14), , DORTMUND , XP002408965 Gefunden im Internet: URL:http://web.archive.org/web/20030514022 249/http://www.energietechnik.fh-dortmund. de/personen/spszentr/Internet_Based_Learni ng/Hardwarekonfiguration.htm> * Seite 1 - Seite 11 *

## Beschreibung

Die vorliegende Erfindung betrifft ein Verfahren zur Projektierung eines Automatisierungssystems. Insbesondere betrifft die Erfindung ein Verfahren zum Konfigurieren von Hardwarebaugruppen in einem Automatisierungssystem. Ferner betrifft die Erfindung ein Computerprogrammprodukt zur Durchführung des Verfahrens.

Automatisierungssysteme weisen eine oder mehrere miteinander verbundene Stationen auf. Jede dieser Stationen wiederum ist modular aufgebaut und kann aus verschiedenen Hardware (HW)-Baugruppen zusammengesetzt sein. Diese HW-Baugruppen bilden im allgemeinen die kleinste Einheit des Automatisierungssystems und sind für den Kunden in einem HW-Baugruppen-Katalog zusammengefasst. In diesem Katalog ist jeder HW-Baugruppe eine Bestellnummer zugeordnet. Damit kann ein Kunde ein Automatisierungssystem, das heißt eine Maschine bestellen, indem er in einem Bestellauftrag an den Hersteller die entsprechenden Bestellnummern angibt. Idealerweise bestellt der Kunde die gewünschten Funktionen der Maschine, woraus dann automatisch die Bestellung mit den Bestellnummern generiert wird. Die Maschine muss dann noch projektiert, das heißt konfiguriert und parametrisiert werden. Dies kann mittels einer Projektiersoftware, wie beispielsweise STEP7 von Siemens, erfolgen. Das bedeutet, nach dem Aufruf der Projektiersoftware öffnet sich eine entsprechende Benutzeroberfläche. Für die Maschine, bzw. für jede Station einzeln wird dann ein Projekt erzeugt. In diesem Projekt werden dann die HW-Baugruppen konfiguriert, das heißt jeder der bestellten und gelieferten Hardwarebaugruppen wird ein Steckplatz in der Station zugeordnet und die HW-Baugruppe entsprechend parametriert. Zum Schluss wird diese Konfiguration noch gespeichert und in das Automatisierungssystem geladen. Die entsprechende Vorgehensweise ist beispielsweise aus der "Einführung in den Simatic-Manager" von Walter, 14.05.2003, bekannt.

Die bekannte Art der Projektierung ist im allgemeinen sehr aufwendig, da sie auf der Ebene der kleinsten Einheiten, nämlich der HW-Baugruppen erfolgt, das heißt es sind bei der Projektierung eine Vielzahl von Einzelschritten vorzunehmen, um alle HW-Baugruppen zu konfigurieren.

Aufgabe der vorliegenden Erfindung ist es nun, ein Verfahren zur Verfügung zu stellen, welches die Projektierung eines Automatisierungssystems für den Kunden vereinfacht.

Die Aufgabe wird gelöst durch ein Verfahren zum Konfigurieren eines Automatisierungssystems gemäß dem Anspruch 1. Ferner wird diese Aufgabe gelöst durch ein Computerprogrammprodukt gemäß Anspruch 2.

Das erfindungsgemäße Verfahren ermöglicht dadurch, dass Hardwarebaugruppen vom Anwender in so genannten Hardware-Paketen zusammengefasst werden, eine weniger aufwendige und damit schnellere Projektierung des Automatisierungssystems.

Vorteilhafterweise ist das im Nachfolgenden beschriebene Verfahren zum Erzeugen von anwenderspezifischen HW-Paketen und das erfindungsgemäße Verfahren zur Einbindung während der Konfiguration / Projektierung mittels entsprechender Computerprogrammprodukte durchführbar.

Weitere Vorteile der vorliegenden Erfindung ergeben sich aus der nachfolgenden Figurenbeschreibung Es zeigen:
- Fig.1: ein Flussdiagramm zum Anlegen eines HW-Pakets, und
- Fig.2: ein Flussdiagramm für die Projektierung unter Berücksichtigung der angelegten HW-Pakete.

In heute bekannten Automatisierungssystemen müssen die HW-Baugruppen mit Hilfe einer Projektiersoftware einzeln konfiguriert werden. Gerade bei großen Automatisierungssystemen besteht die zu projektierende Maschine aber in der Regel aus mehreren Stationen. Jede der Stationen ist wiederum aus einer Vielzahl von HW-Baugruppen aufgebaut, wobei jede HW-Baugruppe an einen Steckplatz eines Bussystems der Station angeschlossen ist. Damit ist aber gerade bei großen Automatisierungssystemen der Aufwand der Projektierung sehr hoch, da hier jede der HW-Baugruppen einzeln in der Projektiersoftware konfiguriert werden muss.

Um diesen Aufwand zu vermeiden sind heute prinzipiell die zwei im Folgenden beschriebenen Lösungen schon denkbar.

Zum einen werden im Voraus mittels der Projektiersoftware eine oder mehrere Unterprojektdateien erzeugt, denen verschiedene HW-Baugruppen zuordnet werden. Bei der Projektierung einer neuen Maschine werden dann eine oder mehrere dieser Unterprojekte in das nun zu erstellende Projekt kopiert. Alternativ kann auch im Voraus der Maximalausbau, das heißt alle erlaubten HW-Baugruppen einer Station, in einem Unterprojekt gespeichert und daraus dann Teile in das eigentliche Projekt kopiert werden. Diese Lösung hat den Vorteil, dass sie heute prinzipiell schon mit der vorhandenen Projektiersoftware realisierbar ist und damit eine schnellere Projektierung ermöglicht. Sie hat aber den Nachteil, dass der Erstellungsaufwand im Voraus sehr hoch ist. Zudem kann es erforderlich sein, dass die Adressen für die HW-Baugruppen während der Projektierung der neuen Station manuell angepasst werden müssen.

Die andere, heute realisierbare Lösung stellen die Katalogprofile selbst dar, die ein Anwender mit Hilfe der Projektierungssoftware erstellen kann. Das heißt neben dem vom Hersteller vorgegebenen HW-Katalog ist es einem Anwender erlaubt, auch selbst individuell angepasste HW-Kataloge zu erstellen. Bei der Projektierung können dann aus dem Hersteller HW-Kataloge und/oder einem der individuell erstellten Kataloge Profile entsprechend HW-Baugruppen ausgewählt und in die Station eingebunden werden. Da die individuell erzeugten HW-Kataloge nur die vom Anwender bestimmten HW-Baugruppen enthalten, wird zwar die Projektierung schneller, da der Anwender in seinen selbst erstellten Katalog-Profilen die HW-Baugruppen schneller findet. Es besteht aber weiterhin der Nachteil, dass die HW-Baugruppen einzeln selektiert, das heißt auch ggf. aus verschiedenen Profilen selektiert, und in die Station eingebunden werden müssen.

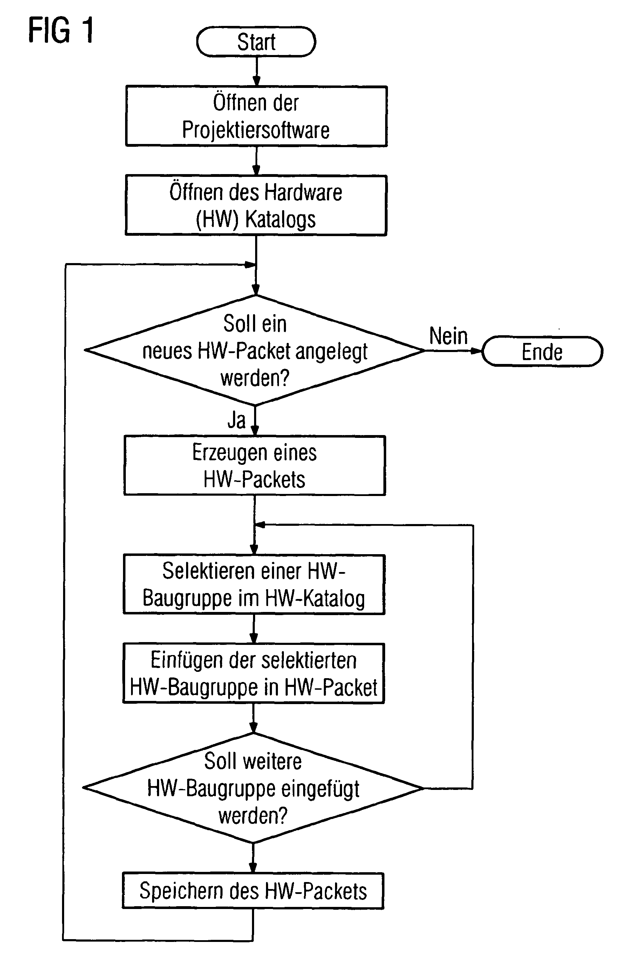

Auf einfachere Art und Weise und damit flexibler lässt sich das Automatisierungssystem aber mit den erfindungsgemäßen Hardware(HW)-Paketen projektieren. Dabei sollen die HW-Pakete so aufgebaut sein, dass sie eine vom Anwender frei bestimmbare Anzahl von HW-Baugruppen umfassen. Das Verfahren zum Anlegen solcher HW-Pakete soll nun anhand des in Fig. 1 dargestellten Flussdiagramms näher beschrieben werden.

Zum Start wird eine Projektiersoftware, wie sie heute bereits beispielsweise als STEP7 von Siemens bekannt ist, geöffnet. Der Anwender hat dann die Möglichkeit mittels eines graphischen Zugangs (Bedienoberfläche) die zu projektierende Station zu Konfigurieren, Parametrieren und Programmieren. In einem weiteren Schritt öffnet er dann den HW-Katalog, der alle HW-Baugruppen enthält. Wenn nun ein neues HW-Paket angelegt werden soll, muss beispielsweise eine entsprechende Datei angelegt werden und auf der Oberfläche ein entsprechendes Fenster geöffnet werden. Dann wird im HW-Katalog Fenster eine HW-Baugruppe selektiert, beispielsweise durch Anklicken der entsprechenden HW-Baugruppen Symbole und anschließend in das HW-Paket eingefügt. Entsprechend werden weitere HW-Baugruppen eingefügt. Vorteilhafterweise können auch mehrere HW-Baugruppen auf einmal im HW-Katalog Fenster selektiert und im HW-Paket Fenster eingefügt werden. Zum Schluss muss das HW-Paket, das heißt die individuell vom Anwender in diesem HW-Paket zusammengestellten HW-Baugruppen, noch gespeichert werden.

Vorteilhafterweise sollte der Anwender dieses und die anderen von ihm individuell erzeugten HW-Pakete als Dateien in einem frei wählbaren Verzeichnis abspeichern können. Dies ermöglicht, dass ein Anwender sich seinen eigenen Katalog aus HW-Paketen zusammenstellen kann. Dieser kann dann beispielsweise auf einem Datenträger (wie CD-ROM) oder auf einem Netzwerkserver gespeichert werden. Damit erhält der Anwender die Möglichkeit, aus verschiedenen Projekten heraus diese individuell erstellten HW-Pakete aufzurufen und bei der Projektierung einzusetzen. Werden die HW-Pakete als Dateien gespeichert, ist es vorteilhaft, dass die Dateinamen vom Anwender frei vergeben werden können. Es ist auch denkbar, die entsprechend dem beschriebenen Verfahren erstellten HW-Pakete als Makros abzuspeichern. Vorteilhaft ist auch die Einbindung der HW-Pakete in das HW-Katalog Profil, so dass ein Anwender direkt aus dem HW-Katalog die Möglichkeit hat, ein entsprechendes HW-Paket auszuwählen. So ist es sinnvoll, den heutigen von STEP7 bekannten HW-Katalog zu übernehmen und hierunter die HW-Pakte abzuspeichern. Obwohl das anhand von Fig. 1 beschriebene Verfahren nur in Bezug auf das Erstellen eines neuen Projektes beschrieben ist, ist es auch für die nachträgliche Bearbeitung von schon erstellten HW-Paketen einsetzbar. So können entsprechend HW-Baugruppen hinzugefügt oder auch gelöscht werden.

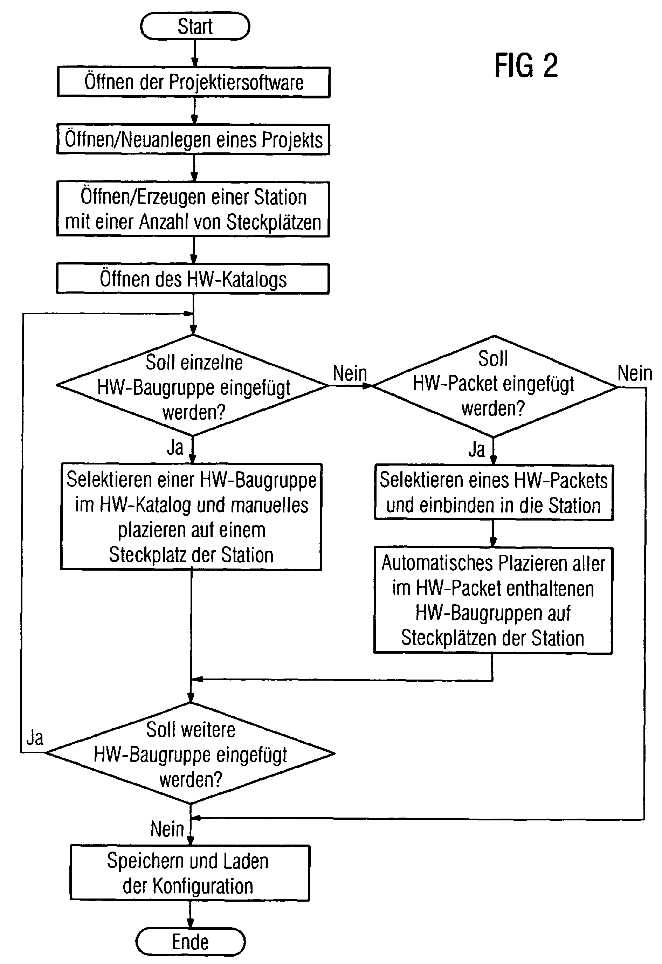

Anhand des in Fig. 2 gezeigten Flussdiagramms soll nun das erfindungsgemäße Verfahren zur Konfiguration eines Automatisierungssystems näher beschrieben werden.

Auch zur Konfiguration muss zuallererst nach dem Start die Projektiersoftware, wie beispielsweise STEP7 von Siemens, geöffnet werden. In der daraufhin erscheinenden Oberfläche kann dann entweder ein schon vorhandenes Projekt geöffnet werden oder ein neues Projekt angelegt werden. Innerhalb des Projektes ist dann eine Station anzulegen oder eine bereits vorhandene Station zu öffnen. Die geöffnete Station wird dann in der Oberfläche in einem separaten Fenster, beispielsweise wie sie von Windows-Oberflächen bekannt sind, angezeigt. Zudem werden in dem Fenster die für diese Station vorhandenen Steckplätze angezeigt. Auf die Form und Inhalt des Fensters soll hier nicht weiter eingegangen werden. Solche Fenster sind dem Fachmann beispielsweise aus dem SIMATIC Manager der STEP7 Projektiersoftware von SIEMENS wohl bekannt. Damit nun das Projekt mit HW-Baugruppen konfiguriert werden kann, muss nun noch der HW-Katalog geöffnet werden. Dies ist im Allgemeinen standardmäßig ein HW-Katalog Profil von einem Hersteller wie Siemens, in dem zumindest alle vom Hersteller lieferbaren HW-Baugruppen zu finden sind. Auch dieser HW-Katalog wird in einem entsprechenden Fenster der Benutzeroberfläche angezeigt und ist wohl bekannt. Soll nun eine einzelne HW-Baugruppe in die Station auf einen Steckplatz eingefügt werden, so ist die entsprechende HW-Baugruppe im HW-Katalog zu selektieren und anschließend vom Anwender manuell auf einem Steckplatz der Station zu platzieren. Dies kann beispielsweise dadurch erfolgen, dass der Anwender die entsprechende HW-Baugruppe im HW-Katalog Fenster mit einem Mauszeiger anklickt und auf einen freien Steckplatz im Stationsfenster zieht.

Beim Platzieren von HW-Baugruppen auf Steckplätzen der Station sind bestimmte Regeln einzuhalten. Auf diese soll aber hier nicht näher eingegangen werden, da diese dem Fachmann auch von existierenden Systemen und deren Projektierung klar sind. Rein beispielhaft wird auf die EP 1 274 291 A2 verwiesen.

Weitere HW-Baugruppen werden entsprechend dem vorher Beschriebenen der Station hinzugefügt. Soll jetzt keine einzelne Baugruppe, sondern ein ganzes HW-Paket eingefügt werden, so muss der Anwender ein entsprechendes HW-Paket öffnen. Wie bereits im Zusammenhang mit Fig. 1 beschrieben, kann ein solches HW-Paket, das ja von einem Anwender individuell aus einer oder mehreren HW-Baugruppen zusammengestellt wurde, beispielsweise als Datei, als Makro oder auch als Untermenge im HW-Katalog selbst vorliegen. So kann ein HW-Paket aus dem HW-Katalog, beispielsweise durch Anklicken mit einem Mauszeiger, selektiert werden und in das Stationsfenster gezogen werden. Sobald das HW-Paket in das Stationsfenster gezogen ist, werden alle im HW-Paket hinterlegten HW-Baugruppen auf freie Steckplätze der Station verteilt. Das heißt durch einmaliges Selektieren eines HW-Pakets hat der Anwender die Möglichkeit, eine ganze Gruppe von HW-Baugruppen auf einmal auf Steckplätzen im Stationsfenster einzufügen. Dies ist gerade dann vorteilhaft, wenn ein Anwender öfters, das heißt in vielen Projekten, immer die gleichen HW-Baugruppen verwendet. Dann kann er gemäß dem in Fig. 1 gezeigten Verfahren ein HW-Paket von diesen Baugruppen erstellen und speichern. Zu einem späteren Zeitpunkt kann er dann dieses HW-Paket in dem in Fig. 2 gezeigten Verfahren zur Konfiguration von HW-Baugruppen benutzen, um möglichst effizient und damit sehr schnell diese HW-Baugruppen einzubinden und zu projektieren.

Sollen weitere HW-Pakete oder HW-Baugruppen eingefügt werden, sind die vorher beschriebenen Schritte entsprechend zu wiederholen. Sollen dagegen keine weiteren HW-Baugruppen eingefügt werden, so ist die Konfiguration zu speichern und in das Automatisierungssystem zu laden. Spätestens zum Zeitpunkt des Speicherns, das heißt vor dem Laden der Konfiguration in das Automatisierungssystem, sind diverse Plausibilitätsuntersuchungen vorzunehmen. Das kann beispielsweise die Überprüfung sein, ob die geforderten Steckplatzregeln eingehalten wurden oder ob die Anzahl der Steckplätze ausreicht, um die HW-Baugruppen einzufügen. Auf diese Plausibilitätsuntersuchungen soll aber hier nicht weiter eingegangen werden, da sie den Plausibilitätsuntersuchungen in heute bekannten Systemen entsprechen, siehe die bereits erwähnte EP 1 274 291 A2.

Ziel der voran weitgehend anhand der Projektiersoftware STEP7 von Siemens beschriebenen Erfindung ist es, dem Anwender, der ein Automatisierungssystem zu projektieren hat, ein Verfahren an die Hand zu geben, mit dem er mit möglichst wenig Aufwand und damit in kurzer Zeit eine Anlage projektieren kann. Dadurch, dass er häufig genutzte HW-Baugruppen zu einem von ihm erzeugten HW-Paket zusammenfasst und dieses beim Einbinden in eine Station wieder automatisch in die einzelnen HW-Baugruppen zerfällt, ist es möglich, auf einen Schlag eine Anzahl von HW-Baugruppen auf einmal in einer Station zu platzieren. Erzeugt ein Anwender verschiedene solcher HW-Pakete, kann er sich seinen eigenen Katalog mit entsprechenden Gruppen von HW-Baugruppen zusammenstellen.

Auch wenn die Erfindung im Wesentlichen im Zusammenhang mit STEP7 beschrieben wurde, ist sie nicht auf diese Projektiersoftware beschränkt. Vielmehr ist sie überall da sinnvoll anwendbar, wo es darum geht, einem Anwender die Abläufe zum Projektieren eines Automatisierungssystems zu erleichtern. So kann das Verfahren beispielsweise bei der Projektierung ganzer Automatisierungssysteme aus einer großen Anzahl von Einzelstationen entsprechend angewandt werden.

## Patentansprüche

1. Verfahren zum Konfigurieren von Hardwarebaugruppen in einem Automatisierungssystem mit den Schritten:
a) Öffnen oder Neuanlegen eines Projektes in einer Projektiersoftware,
b) Öffnen oder Erzeugen, in diesem Projekt, einer Station mit einer Anzahl von Steckplätzen,
c) Öffnen eines Hardware-Katalogs, der eine Vielzahl von Hardware-Baugruppen umfasst,
d) Einfügen von zumindest einer Hardware-Baugruppe aus dem Hardware-Katalog in die Station,
e) Speichern der Station mit den in die Station eingefügten Hardware-Baugruppen,
**dadurch gekennzeichnet,**
**dass** ein oder mehrere Hardware-Baugruppen zu einem Hardware-Paket zusammenfassbar sind und das Hardware-Paket in dem bereits geöffneten oder einem anderen Hardware-Katalog als abrufbare Einheit abgespeichert wird,
**dass** zum Einfügen der Hardware-Baugruppen, die zu einem Hardware-Paket zusammengefasst und abgespeichert ,sind, das Hardware-Paket als Einheit zuerst selektiert wird und
**dass**, sobald das Hardware-Paket als Einheit in die Station eingebunden wird, alle darin enthaltenen Hardware-Baugruppen automatisch auf freie Steckplätze der Station verteilt werden.

2. Computerprogrammprodukt, das Programmcode umfasst, der von einem Rechner ausführbar ist, wobei die Ausführung des Programmcodes durch den Rechner die Durchführung des Verfahrens nach Anspruch 1 bewirkt.

## Claims

1. A method for configuring hardware modules in an automation system, comprising the steps:
a) Open an existing project or create a new project in a project engineering software tool,
b) Open or generate, in this project, a station having a plurality of slots,
c) Open a hardware catalogue comprising a plurality of hardware modules,
d) Insert at least one hardware module from the hardware catalogue into the station,
e) Save the station together with the hardware modules inserted therein,
**characterised in that**
one or more hardware modules can be combined to form a hardware packet, and the hardware packet is stored as a recallable unit in the already opened hardware catalogue or another hardware catalogue,
in order to insert the hardware modules which are combined for form a hardware packet and stored, the hardware packet is first selected as a unit and, as soon as the hardware packet is integrated into the station as a unit, all the hardware modules contained therein are automatically allocated to free slots of the station.

2. A computer program product which includes program codes which can be executed by a computer, with the execution of the program code by the computer effecting the implementation of the method according to claim 1.

## Revendications

1. Procédé de configuration de modules matériels dans un système d'automatisation, comprenant les stades :
a) ouverture ou recréation d'un projet dans un logiciel de projet,
b) ouverture ou production dans ce projet d'un poste ayant un certain nombre d'emplacements d'enfichage,
c) ouverture d'un catalogue matériel qui comprend une pluralité de modules matériels,
d) insertion dans le poste d'au moins un module matériel du catalogue matériel,
e) mise en mémoire du poste ayant les modules matériel insérés dans le poste,
**caractérisé en ce que**
on rassemble un ou plusieurs modules matériels en un paquet matériel et on mémorise sous la forme d'une unité pouvant être appelée le paquet matériel dans le catalogue matériel déjà ouvert ou dans un autre catalogue matériel,
**en ce que**, pour insérer les modules matériels qui sont rassemblés en un paquet matériel et mis en mémoire, on sélectionne d'abord en tant qu'unité le paquet matériel et
**en ce que**, dès que le paquet matériel est inséré en tant qu'unité dans le poste, on répartit automatiquement tous les modules matériels qui y sont contenus sur des emplacements libres d'enfichage du poste.

2. Produit de programme informatique, qui comprend un code de programme qui peut être exécuté sur un ordinateur, l'exécution du code de programme par l'ordinateur provoquant la mise en oeuvre du procédé suivant la revendication 1.
